# FASCICULE DE BREVET EUROPEEN

(11) **EP 2 892 398 B1**
(45) Date de publication et mention de la délivrance du brevet: **12.10.2016**
(21) Numéro de dépôt: 13767035.2
(22) Date de dépôt: 03.09.2013
(51) Int. Cl.: A47J 19/02, A47J 43/07

(54) **APPAREIL ÉLECTROMÉNAGER DE PRÉPARATION CULINAIRE COMPORTANT UN RÉCIPIENT DE TRAVAIL RECEVANT UN OUTIL DE BROYAGE**
HAUSHALTSVORRICHTUNG ZUR LEBENSMITTELHERSTELLUNG MIT EINEM ARBEITSBEHÄLTER MIT EINEM MAHLWERKZEUG
HOUSEHOLD FOOD PREPARATION APPARATUS COMPRISING A WORK RECEPTACLE CONTAINING A GRINDING TOOL

(30) Priorité: 06.09.2012 FR 1258364
(43) Date de publication de la demande: 15.07.2015
(73) Titulaire: SEB S.A., 69130 Ecully (FR)
(72) Inventeur: LE GRAND, Olivier, 21380 Messigny et Vantoux (FR)
(74) Mandataire: Bourrières, Patrice
(86) Numéro de dépôt international: PCT/FR2013/052024
(87) Numéro de publication internationale: WO 2014/037662

(56) Documents cités:
- EP-A1- 1 949 803
- US-A- 2 273 093
- US-B1- 6 742 447

## Description

La présente invention se rapporte au domaine technique général des appareils électroménagers de préparation culinaire comportant un récipient de travail recevant des aliments à broyer et se rapporte plus particulièrement à un appareil comportant un récipient de travail comportant un fond comprenant un outil de broyage entrainé en rotation, l'outil de broyage comprenant une surface supérieure abrasive venant au contact des aliments.

Il est connu, de la demande de brevet EP 1 949 803, un appareil de préparation culinaire, comportant un récipient de travail renfermant un outil de broyage entrainé en rotation par un moteur et une ouverture supérieure munie d'un poussoir permettant d'amener les aliments contre l'outil de broyage. Dans ce document, l'outil de broyage comportant plusieurs étages, chaque étage étant muni d'une surface supérieure abrasive. Un tel outil de broyage à étages présente l'avantage de réduire la taille du talon résultant à la fin du broyage des aliments.

Cependant, un tel appareil présente l'inconvénient de nécessiter un effort relativement important sur le poussoir pour obtenir un broyage efficace des aliments. De plus, le broyage des aliments avec un tel appareil présente l'inconvénient d'être relativement long et de conduire à l'obtention d'un jus fortement oxydé. Enfin, un tel appareil ne permet pas le broyage des aliments trop durs.

Il est également connu de la demande de brevet US 2 273 093, un appareil de préparation culinaire comprenant un récipient de travail recevant des aliments à broyer pour en extraire du jus, le récipient de travail comportant un fond comprenant un outil entrainé en rotation autour d'un axe, l'outil comportant une surface supérieure abrasive venant au contact des aliments. Dans ce document, la surface supérieure de l'outil de broyage comprend une lame en saillie s'étendant radialement à proximité de la périphérie de l'outil de broyage, la lame venant gratter les aliments lors de la rotation de l'outil. Cependant, cette lame ne fait que gratter la surface des aliments et ne permet pas de les broyer.

Aussi, un but de la présente invention est de proposer un appareil de préparation des aliments remédiant à ces inconvénients, en permettant notamment le broyage rapide d'un grand nombre d'aliments, et notamment des aliments durs tels que des graines, des épices ou du chocolat, sans que l'utilisateur n'ait besoin d'intervenir avec un poussoir afin d'assurer le broyage des aliments. Un autre but de la présente invention est de proposer un appareil de préparation des aliments permettant d'obtenir un jus moins oxydé.

A cet effet, l'invention a pour objet un appareil électroménager de préparation culinaire comportant un récipient de travail recevant des aliments à broyer pour en extraire du jus, le récipient de travail comportant un fond comprenant un outil de broyage entrainé en rotation autour d'un axe X, l'outil de broyage comportant une surface supérieure abrasive venant au contact des aliments, caractérisé en ce que la surface supérieure de l'outil de broyage comprend un obstacle transversal en saillie s'étendant au moins en partie à proximité de la périphérie de l'outil de broyage, l'obstacle transversal comprenant une face latérale ne présentant pas une forme de révolution autour de l'axe X et venant heurter les aliments lors de la rotation de l'outil de broyage autour de l'axe X.

Selon une autre caractéristique de l'invention, la face latérale est lisse.

Selon une autre caractéristique de l'invention, l'obstacle transversal présente une forme rectangulaire et comprend deux faces latérales s'étendant dans un plan parallèle à l'axe X.

Selon une autre caractéristique de l'invention, la face latérale est concave.

Selon une autre caractéristique de l'invention, l'obstacle transversal présente la forme générale d'un I, l'obstacle transversal présentant une plus grande largeur à proximité de ses extrémités longitudinales qu'au niveau de son centre.

Selon une autre caractéristique de l'invention, l'obstacle transversal présente la forme générale d'un S, l'obstacle transversal comprenant deux faces latérales présentant une partie concave formant un bord d'attaque et une partie convexe formant un bord de fuite.

Selon une autre caractéristique de l'invention, l'obstacle transversal est centré sur l'axe X.

Selon une autre caractéristique de l'invention, l'obstacle transversal présente une hauteur comprise entre 5 et 20 mm.

Selon une autre caractéristique de l'invention, l'outil de broyage comporte un corps en forme de disque surmonté par l'obstacle transversal.

Selon une autre caractéristique de l'invention, l'obstacle transversal s'étend en travers du disque sur sensiblement toute sa largeur.

Selon une autre caractéristique de l'invention, le disque comporte une surface supérieure abrasive. De manière avantageuse, cette surface supérieure abrasive est constituée par une plaque métallique rapportée sur le disque.

Selon une autre caractéristique de l'invention, l'obstacle transversal comporte une surface supérieure abrasive. De manière avantageuse, cette surface supérieure abrasive est constituée par une plaque métallique rapportée sur l'obstacle transversal.

Selon une autre caractéristique de l'invention, le diamètre de l'outil de broyage est légèrement inférieur au diamètre du récipient de travail de sorte qu'il résulte un espace inférieur à 1 cm entre la périphérie de l'outil de broyage et le récipient de travail.

Selon une autre caractéristique de l'invention, l'outil de broyage comprend des rainures sur sa périphérie, les rainures présentant une inclinaison de 5 à 60° par rapport à l'axe X de rotation de l'outil de broyage.

On comprendra mieux les buts, aspects et avantages de la présente invention, d'après la description donnée ci-après de plusieurs modes particuliers de réalisation de l'invention présentés à titre d'exemples non limitatifs, en se référant aux dessins annexés dans lesquels :
- la figure 1 est une vue en perspective d'un appareil de préparation culinaire selon un mode particulier de réalisation de l'invention,
- la figure 2 est une vue en perspective de l'outil de broyage équipant l'appareil de la figure 1,
- la figure 3 est une vue en perspective d'un outil de broyage selon une variante de réalisation, destiné à équiper l'appareil selon l'invention de la figure 1,
- la figure 4 est une vue en perspective d'une variante de réalisation de l'outil de broyage de la figure 3,
- la figure 5 est une vue en perspective d'un outil de broyage selon un autre variante de réalisation destiné à équiper l'appareil selon l'invention,
- la figure 6 est une vue en perspective d'une variante de réalisation de l'outil de broyage de la figure 5.

Seuls les éléments nécessaires à la compréhension de l'invention ont été représentés. Pour faciliter la lecture des dessins, les mêmes éléments portent les mêmes références d'une figure à l'autre.

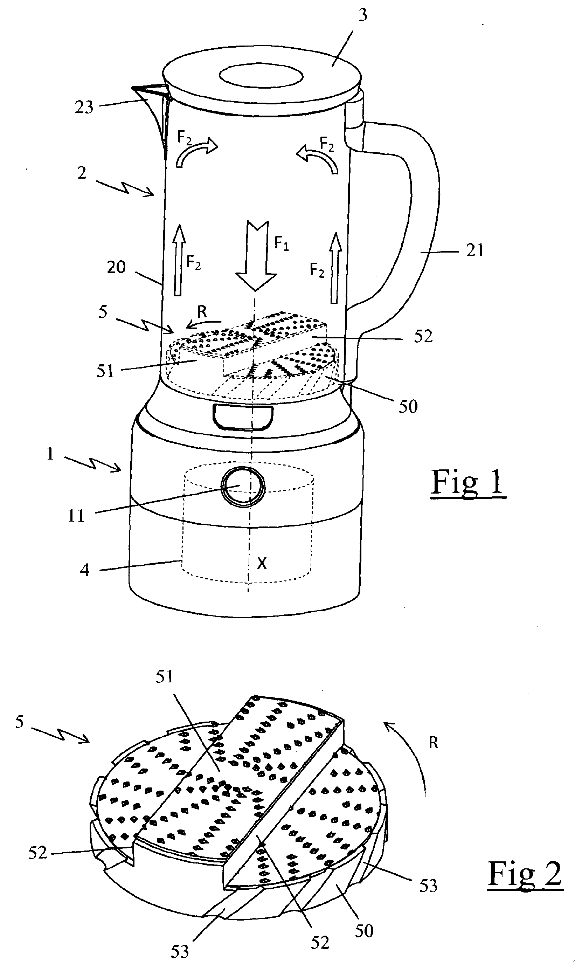

La figure 1 représente un appareil électroménager de préparation culinaire, de type broyeur ou mélangeur, comportant un boitier 1 servant de socle à un récipient de travail 2 amovible apte à contenir des aliments liquides ou solides, le récipient de travail 2 présentant une enveloppe 20 comprenant une extrémité supérieure ouverte, par laquelle des aliments peuvent être introduits dans le récipient de travail 2, cette extrémité supérieure étant fermée par un couvercle 3 amovible.

Le boîtier 1 renferme classiquement un moteur 4, représenté schématiquement en pointillé sur la figure 1, dont la mise en route et la vitesse de fonctionnement sont contrôlées au moyen d'un bouton de commande 11. Le moteur 4 permet l'entraînement en rotation d'un outil de broyage 5 autour d'un axe X selon le sens trigonométrique illustré par la flèche R sur les figures 1 et 2, l'outil de broyage 5 étant disposé dans le fond du récipient de travail 2 et étant avantageusement amovible.

De manière préférentielle, l'outil de broyage 5 présente un diamètre extérieur légèrement inférieur au diamètre de l'enveloppe 20 de manière à ce qu'il résulte un faible espace entre la périphérie de l'outil de broyage 5 et l'enveloppe 20. A titre d'exemple, l'enveloppe 20 du récipient de travail 2 présente un diamètre intérieur de l'ordre de 10 cm et l'outil de broyage 5 présente un diamètre extérieur de l'ordre de 9 cm de manière à ce qu'il résulte un espace de l'ordre de 5 mm entre l'enveloppe 20 et la périphérie de l'outil de broyage 5.

Le récipient de travail 2 est muni d'une poignée 21 de préhension renfermant, de manière connue en soi, des moyens de sécurité, non représentés sur les figures, empêchant le fonctionnement du moteur 4 en l'absence du couvercle 3 sur le récipient de travail 2 et comporte un bec verseur 23 à l'opposé de la poignée 21.

Conformément à la figure 2, l'outil de broyage 5 comporte un corps en forme de disque 50 cylindrique surmonté d'un obstacle transversal 51 faisant saillie sur la surface du disque 50, le disque 50 et l'obstacle transversal 51 comprenant une face supérieure abrasive venant râper les aliments présents dans le récipient de travail 2 lors de la rotation de l'outil de broyage 5.

La face supérieure abrasive du disque 50 et de l'obstacle transversal 51 est avantageusement constituée par une plaque métallique munie de multiples aspérités qui est rapportée et fixée sur le disque 50 et l'obstacle transversal 51, ces derniers étant avantageusement réalisés dans un matériau thermoplastique.

Dans le mode particulier de réalisation de l'invention illustré sur la figure 2, l'obstacle transversal 51 est constitué par un barreau de forme générale rectangulaire disposé en position centrale sur le disque 50, l'obstacle transversal 51 s'étendant longitudinalement sur tout le diamètre du disque 50 et présentant des faces latérales 52 lisses et planes orientées perpendiculairement au vecteur de déplacement de l'outil de broyage 5 de sorte que les faces latérales 52 viennent heurter frontalement les aliments lors de la rotation de l'outil de broyage 5 autour de l'axe X.

A titre d'exemple, l'obstacle transversal 51 présente une largeur de l'ordre de 3 cm et les faces latérales 52 présentent une hauteur comprise entre 5 et 20 mm et avantageusement de l'ordre de 10 mm, cette hauteur pouvant être soit constante, soit variable sur toute la longueur de l'obstacle transversal.

De manière préférentielle, le disque 50 comprend une pluralité de rainures 53 réparties sur toute la périphérie de l'outil de broyage 5, les rainures 53 présentant un angle d'inclinaison par rapport à l'axe X de rotation compris entre 5° et 60° et avantageusement de l'ordre de 45°, les rainures 53 étant inclinées de telle sorte que l'extrémité supérieure des rainures 53 se trouve en amont de l'extrémité inférieure des rainures 53 lors de l'entrainement en rotation de l'outil de broyage 5 par le moteur 4.

Le fonctionnement de l'appareil électroménager selon le premier mode de réalisation va maintenant être décrit.

Lorsque l'utilisateur souhaite réaliser de la purée, de la compote, de la soupe ou du jus à partir d'aliments solides, il insère dans le récipient de travail 2 les aliments solides, tels que des fruits ou des légumes non cuits, avec éventuellement un peu d'eau, puis il ferme le couvercle 3 afin que ce dernier neutralise la sécurité interdisant le fonctionnement de l'appareil sans la présence du couvercle 3.

L'utilisateur actionne ensuite le bouton de commande 11, ce qui provoque la mise en marche du moteur 4 de l'appareil et l'entraînement en rotation de l'outil de broyage 5 à une vitesse comprise entre 10 000 et 15 000 tr/min. La rotation de l'outil de broyage 5 crée alors une aspiration des aliments vers l'outil de broyage 5 par dépression au sein du récipient de travail 2, illustré par la flèche centrale F₁ sur la figure 1, et un refoulement vers le haut des aliments le long de l'enveloppe 20, illustré par les flèches F₂, ce phénomène de refoulement étant augmenté par la présence des rainures 53 obliques à la périphérie de l'outil de broyage 5. Cette aspiration au centre du récipient de travail permet d'exercer un effort presseur entre les aliments à broyer et les surfaces supérieures abrasives de l'outil de broyage 5.

La rotation de l'outil de broyage 5 crée également un vortex dans le récipient de travail 2 et les aliments broyés, par les chocs contre les faces latérales 52 de l'obstacle transversal 51 et par l'action des aspérités à la surface supérieure de l'outil de broyage 5, sont centrifugés vers l'enveloppe 20 du récipient de travail 2 permettant ainsi de libérer le centre de l'outil de broyage 5 sur une surface suffisamment importante pour assurer le broyage des aliments.

En particulier, l'obstacle transversal 51 de l'outil de broyage 5 permet de générer un régime turbulent dans le récipient de travail 2 lors de la phase de broyage, les morceaux solides étant ramenés au centre du récipient de travail 2 alors que les aliments réduits sont centrifugés sur l'enveloppe 20 du récipient de travail 2.

La combinaison de ces phénomènes permet un broyage efficace des aliments durs, non cuits et entiers, tels que des pommes de terre, des carottes ou oignons, ceci dans un temps très réduit, compris entre 1 seconde et 30 secondes selon le cas.

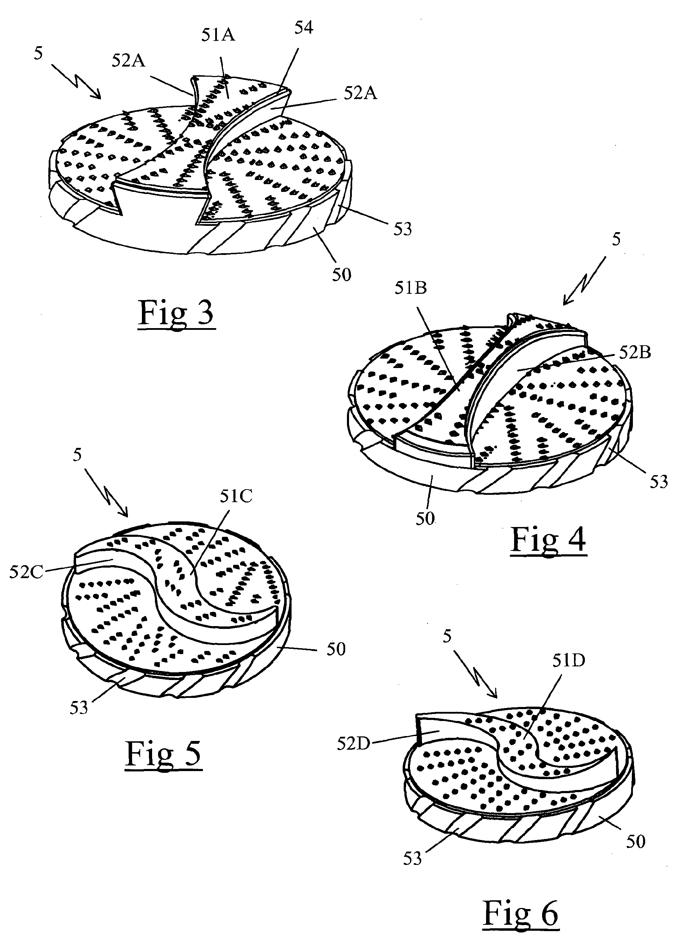

Les figures 3 à 6 illustrent des variantes de réalisation de l'outil de broyage 5 pouvant également équiper l'appareil de la figure 1.

Dans ces variantes de réalisation, l'outil de broyage 5 se différencie de l'outil de broyage selon le premier mode de réalisation uniquement par la forme de l'obstacle transversal, le disque et l'obstacle transversal conservant une face supérieure abrasive.

La figure 3 illustre un outil de broyage 5 selon une variante de réalisation dans laquelle le disque 50 cylindrique de l'outil de broyage est surmonté d'un obstacle transversal 51A présentant une forme générale en 1 s'étendant longitudinalement sur tout le diamètre du disque, l'obstacle transversal 51A présentant des faces latérales 52A lisses et concaves inclinées en direction de la surface supérieure du disque 50 de sorte que les faces latérales 52A comportent un bord supérieur 54 formant un angle aigu avec la surface supérieure de l'obstacle transversal 51 A.

A titre d'exemple, l'obstacle transversal 51A présente une largeur de l'ordre de 3 cm au niveau de ses extrémités longitudinales et une largeur de l'ordre de 1 cm au niveau de son centre, les faces latérales 52A présentant une hauteur de l'ordre de 1 cm et étant inclinées de l'ordre de 15° par rapport à l'axe vertical.

Une telle variante de réalisation présente l'avantage de permettre l'obtention d'une plus grande efficacité dans la fragmentation des aliments lors de la percussion du bord supérieur 54 de l'obstacle transversal 51A sur les aliments ainsi qu'une plus grande facilité de préhension de l'outil de broyage 5 lors du démontage de celui par l'utilisateur pour son nettoyage, l'utilisateur pouvant facilement saisir l'outil de broyage 5 en plaçant ses doigts sur les faces latérales 52A lisses. De plus, la forme concave des faces latérales 52A présente l'avantage de repousser les aliments durs en direction du centre du récipient de travail 2 et d'éviter que ces derniers ne viennent se coincer entre la périphérie de l'obstacle transversal 51 A et l'enveloppe 20 du récipient de travail.

La figure 4 illustre une variante de réalisation de l'outil de broyage de la figure 3 dans laquelle le disque 50 est surmonté d'un obstacle transversal 51 B présentant des faces latérales 52B concaves faisant un angle droit avec la surface supérieure du disque 50. Dans cette variante de réalisation, l'obstacle transversal 51 B comporte une hauteur plus importante en son centre qu'au niveau de ses extrémités.

A titre d'exemple, l'obstacle transversal 51 B présente une largeur de l'ordre de 2,5 cm au niveau de ses extrémités longitudinales et une largeur de l'ordre de 5 mm au niveau de son centre, les faces latérales 52B présentant une hauteur de l'ordre de 2 cm au centre de l'outil de broyage 5 et de l'ordre de 5 mm au niveau de ses extrémités longitudinales.

Les figures 5 et 6 illustrent un outil de broyage 5 selon des variantes de réalisation dans lesquelles le disque 50 cylindrique de l'outil de broyage 5 est surmonté d'un obstacle transversal 51 C, 51 D présentant une forme générale en S inversé, avec des extrémités longitudinales effilées venant dans le prolongement de la périphérie du disque 50. L'obstacle transversal 51 C, 51 D présente des faces latérales 52C, 52D successivement concave et convexe, la partie concave des faces latérales 52C, 52D constituant le bord d'attaque de l'obstacle lors de la rotation de l'outil de broyage 5 dans le sens trigonométrique et la partie convexe de faces latérales 52C, 52D constituant le bord de fuite.

Dans l'exemple illustré sur la figure 5, la hauteur de l'obstacle transversal 51C est constante et de l'ordre de 1 cm, la largeur de l'obstacle transversal 51 C au niveau du centre étant de l'ordre de 15 mm.

Dans l'exemple illustré sur la figure 6, la hauteur de l'obstacle transversal 51 D est plus faible au niveau de son centre qu'au niveau de ses extrémités, la hauteur de l'obstacle transversal 51 D étant de l'ordre de 5 mm en son centre et de 1 cm au niveau des extrémités longitudinales.

Le fonctionnement de l'appareil selon l'invention avec les différents outils de broyage décrits sur les figures 3 à 6 est similaire au fonctionnement de l'appareil décrit pour le premier mode de réalisation, un tel appareil présentant l'avantage de broyer efficacement et facilement des aliments que l'on n'arrive pas à broyer habituellement avec un appareil de type "blender" équipé d'un couteau rotatif, comme par exemple les pommes entières, les amandes, les carottes, les poireaux, les grains de café, les tablettes de chocolat, etc.

Un tel appareil présente également l'avantage d'être très simple d'usage, aucune n'action n'étant nécessaire de la part de l'utilisateur entre la mise en place des aliments dans le récipient de travail et l'obtention de la réduction totale en purée.

Enfin, l'appareil muni d'un tel outil de broyage présente l'avantage d'être facile à nettoyer, les faces lisses de l'outil de broyage formant des zones de préhension par lesquelles l'utilisateur peut saisir l'outil de broyage sans risque de se blesser.

Bien entendu, l'invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

Ainsi, dans une variante de réalisation non illustrée, le couvercle du récipient de travail pourra comprendre un poussoir équipé d'un dispositif de filtration tel que cela est décrit plus en détails dans la demande de brevet FR 11 62309 déposée par la demanderesse.

## Revendications

1. Appareil électroménager de préparation de culinaire comportant un récipient de travail (2) recevant des aliments à broyer pour en extraire du jus, ledit récipient de travail (2) comportant un fond comprenant un outil de broyage (5) entrainé en rotation autour d'un axe X, ledit outil de broyage (5) comportant une surface supérieure abrasive venant au contact des aliments, ladite surface supérieure de l'outil de broyage (5) comprenant un obstacle transversal (51; 51A; 51B; 51C; 51D) en saillie s'étendant au moins en partie à proximité de la périphérie de l'outil de broyage (5), ledit obstacle transversal (51; 51A; 51 B; 51C; 51 D) comprenant une face latérale (52; 52A; 52B; 52C; 52D) ne présentant pas une forme de révolution autour de l'axe X et venant heurter les aliments lors de la rotation de l'outil de broyage (5) autour de l'axe X, **caractérisé en ce que** ledit obstacle transversal (51; 51 A; 51 B; 51 C; 51 D) présente une hauteur comprise entre 5 et 20 mm.

2. Appareil selon la revendication 1, **caractérisé en ce que** ladite face latérale (52; 52A; 52B; 52C; 52D) est lisse.

3. Appareil selon l'une quelconque des revendications 1 à 2, **caractérisé en ce que** ledit obstacle transversal (51) présente une forme rectangulaire et comprend deux faces latérales (52) s'étendant dans un plan parallèle à l'axe X.

4. Appareil selon l'une quelconque des revendications 1 à 2, **caractérisé en ce que** ladite face latérale (52A; 52B) est concave.

5. Appareil selon l'une quelconque des revendications 1 à 4, **caractérisé en ce que** l'obstacle transversal (51 A; 51 B) présente la forme générale d'un I, ledit obstacle transversal (51 A; 51 B) présentant une plus grande largeur à proximité de ses extrémités longitudinales qu'au niveau de son centre.

6. Appareil selon l'une quelconque des revendications 1 à 4, **caractérisé en ce que** l'obstacle transversal (51 C; 51 D) présente la forme générale d'un S, l'obstacle transversal (51 C; 51 D) comprenant deux faces latérales (52C; 52D) présentant une partie concave formant un bord d'attaque et une partie convexe formant un bord de fuite.

7. Appareil selon l'une quelconque des revendications 1 à 6, **caractérisé en ce que** ledit obstacle transversal est centré sur l'axe X.

8. Appareil selon l'une quelconque des revendications 1 à 7, **caractérisé en ce que** l'outil de broyage (5) comporte un corps en forme de disque (50) surmonté par ledit obstacle transversal (51; 51 A; 51 B; 51 C; 51 D).

9. Appareil selon la revendication 8, **caractérisé en ce que** ledit obstacle transversal (51; 51A; 51 B; 51 C; 51 D) s'étend en travers du disque (50) sur sensiblement toute sa largeur.

10. Appareil selon l'une quelconque des revendications 8 à 9, **caractérisé en ce que** le disque (50) comporte une surface supérieure abrasive.

11. Appareil selon l'une quelconque des revendications 8 à 10, **caractérisé en ce que** ledit obstacle transversal (51; 51 A; 51 B; 51 C; 51 D) comporte une surface supérieure abrasive.

12. Appareil selon l'une quelconque des revendications 1 à 11, **caractérisé en ce que** le diamètre de l'outil de broyage (5) est légèrement inférieur au diamètre du récipient de travail (2) de sorte qu'il résulte un espace inférieur à 1 cm entre la périphérie de l'outil de broyage (5) et le récipient de travail (2).

13. Appareil selon l'une quelconque des revendications 1 à 12, **caractérisé en ce que** ledit outil de broyage (5) comprend des rainures (53) sur sa périphérie, lesdites rainures (53) présentant une inclinaison de 5 à 60° par rapport à l'axe X de rotation de l'outil de broyage (5).

## Patentansprüche

1. Elektrisches Haushaltsgerät zur Lebensmittelzubereitung, bestehend aus einem Arbeitsbehälter (2), der die zu zerkleinernden Lebensmittel aufnimmt, um sie zu entsaften, wobei dieser Arbeitsbehälter (2) einen Boden umfasst, der ein Zerkleinerungswerkzeug (5) aufweist, welches um eine Achse X in Drehung versetzt wird, wobei dieses Zerkleinerungswerkzeug (5) eine raue Oberseite aufweist, die mit den Lebensmitteln in Kontakt kommt, wobei diese Oberseite des Zerkleinerungswerkzeugs (5) ein vorstehendes quergelagertes Hindernis (51; 51A; 51B; 51C; 51D) umfasst, das sich zumindest teilweise in der Nähe des Umfangs des Zerkleinerungswerkzeugs (5) erstreckt, wobei dieses quergelagerte Hindernis (51; 51A; 51B; 51C; 51D) eine Seitenwand (52; 52A; 52B; 52C; 52D) aufweist, die keine Drehform um die Achse X darstellt und die bei der Drehung des Zerkleinerungswerkzeugs (5) um die Achse X auf die Lebensmittel trifft, **dadurch gekennzeichnet, dass** dieses quergelagerte Hindernis (51; 51A; 51 B; 51 C; 51 D) eine Höhe zwischen 5 und 20 mm aufweist.

2. Gerät nach Anspruch 1, **dadurch gekennzeichnet, dass** diese Seitenwand (52; 52A; 52B; 52C; 52D) glatt ist.

3. Gerät nach einem der Ansprüche 1 bis 2, **dadurch gekennzeichnet, dass** dieses quergelagerte Hindernis (51) eine rechteckige Form aufweist und zwei Seitenwände (52) umfasst, die sich auf einer parallel zur Achse X gelagerten Ebene erstrecken.

4. Gerät nach einem der Ansprüche 1 bis 2, **dadurch gekennzeichnet, dass** diese Seitenwand (52A; 52B) konkav ist.

5. Gerät nach einem der Ansprüche 1 bis 4, **dadurch gekennzeichnet, dass** das quergelagerte Hindernis (51A; 51B) die generelle Form eines I aufweist, wobei dieses quergelagerte Hindernis (51A; 51B) in der Nähe seiner äußersten Längsenden eine größere Breite aufweist als auf der Höhe seines Zentrums.

6. Gerät nach einem der Ansprüche 1 bis 4, **dadurch gekennzeichnet, dass** das quergelagerte Hindernis (51 C; 51 D) die generelle Form eines S aufweist, wobei das quergelagerte Hindernis (51 C; 51 D) zwei Seitenwände (52C; 52D) umfasst, die einen konkaven Teil mit einem reibenden Rand und einen konvexen Teil mit einem ableitenden Rand aufweisen.

7. Gerät nach einem der Ansprüche 1 bis 6, **dadurch gekennzeichnet, dass** dieses quergelagerte Hindernis auf der Achse X zentriert ist.

8. Gerät nach einem der Ansprüche 1 bis 7, **dadurch gekennzeichnet, dass** das Zerkleinerungswerkzeug (5) einen Körper in Form einer Scheibe (50) aufweist, der von diesem quergelagerten Hindernis (51; 51A; 51 B; 51 C; 51 D) überragt wird.

9. Gerät nach Anspruch 8, **dadurch gekennzeichnet, dass** dieses quergelagerte Hindernis (51; 51A; 51 B; 51 C; 51 D) sich über weitgehend die gesamte Länge der Scheibe (50) erstreckt.

10. Gerät nach einem der Ansprüche 8 bis 9, **dadurch gekennzeichnet, dass** die Scheibe (50) eine raue Oberseite aufweist.

11. Gerät nach einem der Ansprüche 8 bis 10, **dadurch gekennzeichnet, dass** dieses quergelagerte Hindernis (51; 51A; 51B; 51C; 51D) eine raue Oberseite aufweist.

12. Gerät nach einem der Ansprüche 1 bis 11, **dadurch gekennzeichnet, dass** der Durchmesser des Zerkleinerungswerkzeugs (5) etwas kleiner ist als der Durchmesser des Arbeitsbehälters (2), sodass sich eine Lücke von weniger als 1 cm zwischen dem Umfang des Zerkleinerungswerkzeugs (5) und dem Arbeitsbehälter (2) ergibt.

13. Gerät nach einem der Ansprüche 1 bis 12, **dadurch gekennzeichnet, dass** dieses Zerkleinerungswerkzeug (5) auf seinem Umfang Rillen (53) aufweist, wobei diese Rillen (53) eine Neigung von 5 bis 60° in Bezug auf die Umdrehungsachse X des Zerkleinerungswerkzeugs (5) aufweisen.

## Claims

1. Food preparation household electrical appliance comprising a working receptacle (2) receiving food to be ground to extract the juice, said working receptacle (2) having a bottom comprising a grinding tool (5) driven in rotation about an X axis, said grinding tool (5) having an abrasive upper surface coming in contact with the food, said upper surface of the grinding tool (5) comprising a projecting transverse obstacle (51; 51A; 51 B; 51 C; 51 D) extending at least partially near the periphery of the grinding tool (5), said transverse obstacle (51; 51A; 51 B; 51 C; 51 D) comprising a lateral side (52; 52A; 52B; 52C; 52D) not having a shape of revolution about the X axis and striking the food during the rotation of the grinding tool (5) about the X axis, **characterised in that** the height of said transverse obstacle (51; 51A; 51 B; 51 C; 51 D) is between 5 mm and 20 mm.

2. Appliance according to claim 1, **characterised in that** said lateral side (52; 52A; 52B; 52C; 52D) is smooth.

3. Appliance according to claim 1 or 2, **characterised in that** the shape of said transverse obstacle (51) is rectangular and comprises two lateral sides (52) extending in a plane parallel to the X axis.

4. Appliance according to claim 1 to 2, **characterised in that** said lateral side (52A; 52B) is concave.

5. Appliance according to any one of claims 1 to 4, **characterised in that** the transverse obstacle (51A; 51B) is generally I-shaped, the width of said transverse obstacle (51A; 51B) being greater near its longitudinal ends than at its centre.

6. Appliance according to any one of claims 1 to 4, **characterised in that** the transverse obstacle (51 C; 51 D) is generally S-shaped, the transverse obstacle (51C; 51D) comprising two lateral sides (52C; 52D) having a concave part forming a leading edge and a convex part forming a trailing edge.

7. Appliance according to any one of claims 1 to 6, **characterised in that** said transverse obstacle is centred on the X axis.

8. Appliance according to any one of claims 1 to 7, **characterised in that** the grinding tool (5) comprises a body in the shape of a disc (50) surmounted by said transverse obstacle (51; 51A; 51 B; 51 C; 51 D).

9. Appliance according to claim 8, **characterised in that** said transverse obstacle (51; 51A; 51 B; 51 C; 51 D) extends through the disc (50) substantially over its entire width.

10. Appliance according to claim 8 or 9, **characterised in that** the disc (50) has an abrasive upper surface.

11. Appliance according to any one of claims 8 to 10, **characterised in that** said transverse obstacle (51; 51A; 51 B; 51 C; 51 D) comprises an abrasive upper surface.

12. Appliance according to any one of claims 1 to 11, **characterised in that** the diameter of the grinding tool (5) is slightly less than the diameter of the working receptacle (2) so that there is a space of less than 1 cm between the periphery of the grinding tool (5) and the working receptacle (2).

13. Appliance according to any one of claims 1 to 12, **characterised in that** said grinding tool (5) comprises grooves (53) on its periphery, said grooves (53) being inclined by 5° to 60° with respect to the X axis of rotation of the grinding tool (5).
